# FASCICULE DE BREVET EUROPEEN

(11) **EP 4 491 452 B1**
(45) Date de publication et mention de la délivrance du brevet: **08.04.2026**
(21) Numéro de dépôt: 24187840.4
(22) Date de dépôt: 10.07.2024
(51) Int. Cl.: B60N 2/865, B60N 2/818, B60N 2/894

(54) **APPUI-TÊTE DE SIÈGE DE VÉHICULE AUTOMOBILE**
KOPFSTÜTZE FÜR KRAFTFAHRZEUGSITZ
HEADREST FOR A MOTOR VEHICLE SEAT

(30) Priorité: 11.07.2023 FR 2307435
(43) Date de publication de la demande: 15.01.2025
(73) Titulaire: TESCA France, 92977 Paris La Défense Cedex (FR)
(72) Inventeur: GEORGES, Laurent, 92977 Paris La Défense Cedex (FR); LEFEVRE, Steve, 92977 Paris La Défense Cedex (FR)
(74) Mandataire: Sayettat, Julien Christian

(56) Documents cités:
- EP-A1- 4 124 505
- WO-A1-2019/238516
- DE-B3- 102018 214 952

## Description

L'invention concerne un appui-tête de siège de véhicule automobile.

Il est connu, notamment du document EP3802208, de réaliser un appui-tête de siège de véhicule automobile, ledit appui-tête comprenant :
- une armature de montage sur un dossier dudit siège,
- un corps principal monté sur ladite armature,
- un corps secondaire monté en coulissement longitudinal sur ledit corps principal, de sorte que ledit corps secondaire puisse adopter une pluralité de positions de réglage longitudinal, ledit corps secondaire étant pourvu d'une paroi de réception de la tête d'un occupant dudit siège,
- un dispositif de verrouillage dudit corps secondaire dans la position de réglage choisie, ledit dispositif comprenant un loquet monté en coulissement vertical sur ledit corps principal entre une position de verrouillage, où il coopère avec une crémaillère de verrouillage s'étendant longitudinalement sur ledit corps secondaire, et une position de déverrouillage, où il s'écarte de ladite crémaillère pour libérer le coulissement dudit corps secondaire, ledit dispositif comprenant en outre un moyen ressort d'actionnement dudit loquet en verrouillage et un moyen d'actionnement dudit loquet en déverrouillage à l'encontre dudit moyen ressort, ladite crémaillère présentant une pluralité de rainures analogues se succédant longitudinalement, lesdites rainures présentant une face arrière inclinée par rapport à la verticale, de manière à être en dépouille, et une face avant sensiblement verticale, de sorte que le coulissement dudit corps secondaire vers l'avant soit possible sans avoir à déverrouiller ledit dispositif et que ledit coulissement soit bloqué vers l'arrière, ledit loquet présentant une partie de verrouillage de forme complémentaire de celle desdites rainures, de sorte que ledit loquet mis en position de verrouillage s'emboite de façon ajustée dans la rainure dans laquelle il est engagé.

Avec un tel agencement, l'occupant du siège effectue une simple traction du corps secondaire vers l'avant pour avancer sa position de réglage.

En revanche, il lui faut actionner en déverrouillage le dispositif de verrouillage pour pouvoir repousser le corps secondaire vers l'arrière, le blocage dudit corps en coulissement arrière en l'absence de déverrouillage volontaire étant dicté par des considérations de sécurité, l'appui-tête devant rester bloqué dans sa position de réglage longitudinal en cas de choc de la tête de l'occupant sur sa paroi de réception.

Le fait que le loquet présente une partie de verrouillage de forme complémentaire de celle des rainures, de sorte que ledit loquet mis en position de verrouillage s'emboite de façon ajustée dans la rainure dans laquelle il est engagé, permet que l'utilisateur actionnant le corps secondaire en traction ressente une sensation de positionnement précis dudit corps dans la position de réglage choisie, ce qui confère une impression qualitative favorable.

Cependant, la réalisation connue s'avère inappropriée pour permettre une parfaite translation du corps secondaire actionné en traction quand l'utilisateur réalise cet actionnement de façon dissymétrique avec une seule main, une amorce de rotation selon un axe sensiblement vertical se produisant alors ; il en résulte une sensation qualitativement défavorable. Une telle situation résulte du fait que le verrouillage se fait en partie médiane du loquet vu selon une direction longitudinale.

Il est également connu de prévoir une rainure d'extrémité arrière de verrouillage du corps secondaire en fin de course vers l'avant, ladite rainure recevant la partie de verrouillage du loquet, ladite rainure présentant une face avant et une face arrière sensiblement verticales, ladite face arrière bloquant tout déplacement vers l'avant dudit corps secondaire en fin de course.

Cependant, avec un tel agencement, la partie de verrouillage du loquet et la rainure d'extrémité ne présentant pas des formes complémentaires, il s'ensuit que ladite partie ne s'insère pas dans ladite rainure de façon ajustée.

Par conséquent, l'utilisateur positionnant le corps secondaire en fin de course peut ressentir une sensation de positionnement imprécis dudit corps, ce qui confère une impression qualitative défavorable liée à un manque de rigidité.

L'invention a pour but de pallier ces inconvénients.

A cet effet, l'invention propose un appui-tête de siège de véhicule automobile, ledit appui-tête comprenant :
- une armature de montage sur un dossier dudit siège,
- un corps principal monté sur ladite armature,
- un corps secondaire monté en coulissement longitudinal sur ledit corps principal, de sorte que ledit corps secondaire puisse adopter une pluralité de positions de réglage longitudinal, ledit corps secondaire étant pourvu d'une paroi de réception de la tête d'un occupant dudit siège,
- un dispositif de verrouillage dudit corps secondaire dans la position de réglage choisie, ledit dispositif comprenant un loquet monté en coulissement vertical sur ledit corps principal entre une position de verrouillage, où il coopère avec une crémaillère de verrouillage s'étendant longitudinalement sur ledit corps secondaire, et une position de déverrouillage, où il s'écarte de ladite crémaillère pour libérer le coulissement dudit corps secondaire, ledit dispositif comprenant en outre un moyen ressort d'actionnement dudit loquet en verrouillage et un moyen d'actionnement dudit loquet en déverrouillage à l'encontre dudit moyen ressort, ladite crémaillère présentant une pluralité de rainures analogues se succédant longitudinalement, lesdites rainures présentant une face arrière inclinée par rapport à la verticale, de manière à être en dépouille, et une face avant sensiblement verticale, de sorte que le coulissement dudit corps secondaire vers l'avant soit possible sans avoir à déverrouiller ledit dispositif et que ledit coulissement soit bloqué vers l'arrière, ledit loquet présentant une partie de verrouillage de forme complémentaire de celle desdites rainures, de sorte que ledit loquet mis en position de verrouillage s'emboite de façon ajustée dans la rainure dans laquelle il est engagé,
ledit appui-tête présentant en outre les caractéristiques suivantes :
- ledit loquet présente une autre partie de verrouillage, lesdites parties de verrouillage étant disposées latéralement de part et d'autre en vue selon une direction longitudinale,
- ladite crémaillère comprend une rainure d'extrémité arrière de verrouillage dudit corps secondaire en fin de course vers l'avant, ladite rainure étant disposée en partie médiane de ladite crémaillère observée en vue selon une direction longitudinale,
- ledit loquet est pourvu d'une partie de verrouillage additionnelle disposée entre lesdites parties de verrouillage de manière à s'insérer dans ladite rainure d'extrémité quand ledit corps secondaire est disposé en fin de course vers l'avant,
- ladite rainure d'extrémité présente une face avant et une face arrière sensiblement verticales, ladite rainure d'extrémité présentant une forme complémentaire de celle de ladite partie additionnelle de sorte que ladite partie additionnelle s'insère dans ladite rainure d'extrémité de façon ajustée, ladite face arrière bloquant tout déplacement vers l'avant dudit corps secondaire en fin de course.

Dans cette description, les termes de positionnement dans l'espace (longitudinal, transversal, vertical, supérieur, inférieur, avant, arrière, ...) sont pris en référence à l'appui-tête disposé dans le véhicule en situation d'utilisation, ledit véhicule s'étendant longitudinalement selon sa longueur (axe X), transversalement selon sa largeur (axe Y) et verticalement selon sa hauteur (axe Z).

Avec l'agencement proposé, on assure une parfaite translation du corps secondaire actionné en traction quand l'utilisateur réalise cet actionnement de façon dissymétrique avec une seule main, l'amorce de rotation sus évoquée se produisant de façon minime ; il en résulte une sensation qualitativement favorable. Une telle situation résulte du fait que le verrouillage se fait selon les deux parties latérales du loquet.

En outre, la partie de verrouillage additionnelle et la rainure d'extrémité présentant des formes complémentaires, il s'ensuit que ladite partie s'insère dans ladite rainure de façon ajustée, avec l'avantage qualitatif qui en résulte.

On notera également que le positionnement de la rainure d'extrémité en partie médiane permet de bien séparer les fonctions de verrouillage intermédiaire et en fin de course.

D'autres particularités et avantages de l'invention apparaîtront dans la description qui suit, faite en référence aux figures jointes, dans lesquelles :

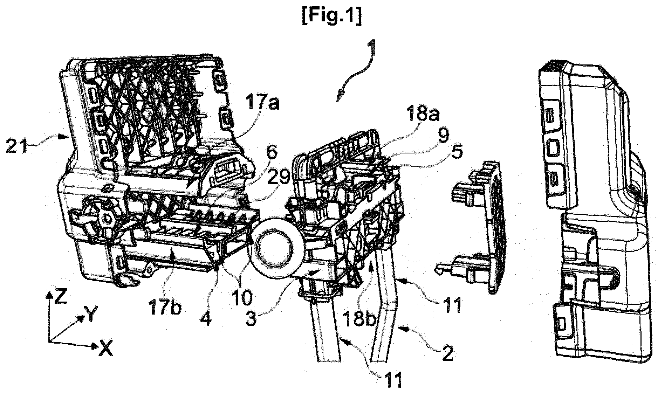

[Fig.1] est une vue semi-éclatée schématique en perspective partielle d'un appui-tête selon une réalisation,

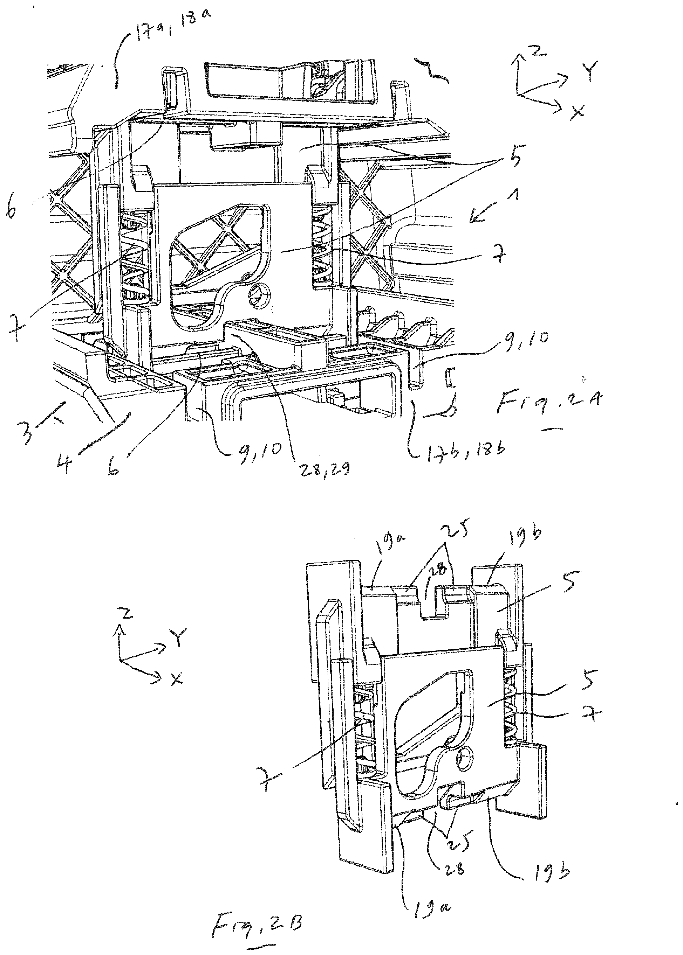

[Fig.2A] est une vue schématique rapprochée de détail de la figure 1 sous un autre angle de vue,
[Fig.2B] est une autre vue schématique rapprochée de détail de la figure 1 sous un autre angle de vue,

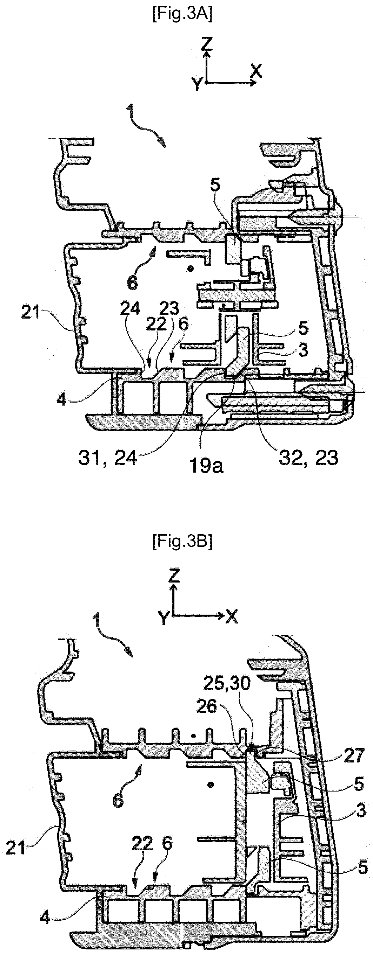

[Fig.3A] est une vue schématique partielle selon une première coupe longitudinale verticale de l'appui-tête des figures précédentes, le dispositif de verrouillage étant activé en verrouillage en coopération avec deux crémaillères,
[Fig.3B] est une vue schématique partielle selon une deuxième coupe longitudinale verticale de l'appui-tête des figures précédentes, le dispositif de verrouillage étant activé en verrouillage en coopération avec deux crans de verrouillage du corps secondaire en fin de course vers l'avant.

En référence aux figures, on décrit un appui-tête 1 de siège de véhicule automobile, ledit appui-tête comprenant :
- une armature 2 de montage sur un dossier dudit siège,
- un corps principal 3 - notamment en matériau plastique moulé - monté sur ladite armature,
- un corps secondaire 4 - notamment en matériau plastique moulé - monté en coulissement longitudinal sur ledit corps principal, de sorte que ledit corps secondaire puisse adopter une pluralité de positions de réglage longitudinal, ledit corps secondaire étant pourvu d'une paroi 21 de réception de la tête d'un occupant dudit siège,
- un dispositif de verrouillage dudit corps secondaire dans la position de réglage choisie, ledit dispositif comprenant un loquet 5 monté en coulissement vertical sur ledit corps principal entre une position de verrouillage, où il coopère avec une crémaillère 6 de verrouillage s'étendant longitudinalement sur ledit corps secondaire, et une position de déverrouillage, où il s'écarte de ladite crémaillère pour libérer le coulissement dudit corps secondaire, ledit dispositif comprenant en outre un moyen ressort 7 d'actionnement dudit loquet en verrouillage et un moyen d'actionnement dudit loquet en déverrouillage - comprenant par exemple un bouton poussoir - à l'encontre dudit moyen ressort, ladite crémaillère présentant une pluralité de rainures 22 analogues se succédant longitudinalement, lesdites rainures présentant une face arrière 23 inclinée par rapport à la verticale, de manière à être en dépouille, et une face avant 24 sensiblement verticale, de sorte que le coulissement dudit corps secondaire vers l'avant soit possible sans avoir à déverrouiller ledit dispositif et que ledit coulissement soit bloqué vers l'arrière, ledit loquet présentant une partie de verrouillage 19a de forme complémentaire de celle desdites rainures, de sorte que ledit loquet mis en position de verrouillage s'emboite de façon ajustée dans la rainure 22 dans laquelle il est engagé,
ledit appui-tête présentant en outre les caractéristiques suivantes :
- ledit loquet présente une autre partie de verrouillage 19b, lesdites parties de verrouillage étant disposées latéralement de part et d'autre en vue selon une direction longitudinale,
- ladite crémaillère comprend une rainure d'extrémité arrière 30 de verrouillage dudit corps secondaire en fin de course vers l'avant, ladite rainure étant disposée en partie médiane de ladite crémaillère observée en vue selon une direction longitudinale,
- ledit loquet est pourvu d'une partie de verrouillage additionnelle 25 disposée entre lesdites parties de verrouillage 19a, 19b de manière à s'insérer dans ladite rainure d'extrémité 30 quand ledit corps secondaire est disposé en fin de course vers l'avant,
- ladite rainure d'extrémité 30 présente une face avant 26 et une face arrière 27 sensiblement verticales, ladite rainure d'extrémité présentant une forme complémentaire de celle de ladite partie additionnelle 25 de sorte que ladite partie additionnelle s'insère dans ladite rainure d'extrémité de façon ajustée, ladite face arrière bloquant tout déplacement vers l'avant dudit corps secondaire en fin de course.

Concrètement, le loquet 5 présentant des parties de verrouillage 19a, 19b de forme complémentaire de celle des rainures 22, signifie qu'une face avant 31 d'une partie de verrouillage 19a, 19b se met en contact ajusté avec la face avant 24 de la rainure 22 concernée et qu'une face arrière 32 de ladite partie de verrouillage se met en contact ajusté avec la face arrière 23 de ladite rainure.

Selon la réalisation représentée, l'armature 2 comprend deux tiges 11 métalliques parallèles.

Selon la réalisation représentée, l'appui-tête 1 comprend deux loquets 5 coopérant chacun avec une crémaillère 6 respective, ce qui permet de renforcer le verrouillage.

Selon la réalisation représentée, les loquets 5 sont en forme générale de plaques coulissant l'une contre l'autre selon deux directions verticales opposées.

Selon la réalisation représentée, une crémaillère 6 est disposée sur un organe de guidage 17a, 17b en coulissement du corps secondaire 4 sur le corps principal 3.

Selon la réalisation représentée, l'organe de guidage 17a, 17b est sous forme d'un tenon solidaire du corps secondaire 4, ledit tenon coulissant dans une mortaise 18a, 18b prévue dans le corps principal 3.

Selon la réalisation représentée, l'appui-tête 1 comprend un tenon supérieur 17a et un tenon inférieur 17b coulissant chacun dans une mortaise supérieure 18a et inférieure 18b respective.

Selon la réalisation représentée :
- le loquet 5 est pourvu de deux rails 9 disposés latéralement de part et d'autre, lesdits rails s'étendant longitudinalement - et saillant verticalement selon la réalisation représentée -,
- lesdits rails coopèrent en coulissement avec deux rails réciproques 10 - sous forme de rainures selon la réalisation représentée - respectifs prévus sur le corps secondaire 4,
de manière à bloquer ledit loquet en rotation selon un axe vertical lors de l'actionnement en réglage dudit corps secondaire.

Selon la réalisation représentée, le loquet 5 est pourvu d'une encoche 28 disposée en zone médiane dudit loquet observé en vue selon une direction longitudinale, ladite encoche coopérant en coulissement avec un rail réciproque 29 - saillant verticalement selon la réalisation représentée - prévu sur le corps secondaire 4, de manière à bloquer ledit loquet en rotation selon un axe vertical lors de l'actionnement en réglage dudit corps secondaire.

Avec un tel agencement, la partie additionnelle 25 s'étend de part et d'autre de l'encoche 28.

Un tel agencement permet, quand il est appliqué en combinaison avec la présence de rails latéraux 9, d'apporter un renforcement du blocage en rotation du loquet 5.

De façon non représentée, le corps principal 3 peut être monté en coulissement sur l'armature 2 de manière à pouvoir adopter une pluralité de positions de réglage vertical, ledit appui-tête comprenant un dispositif de verrouillage dudit corps principal dans la position de réglage choisie.

Selon une réalisation non représentée, le dispositif de verrouillage du corps principal 3 comprend :
- une pluralité de crans de verrouillage s'étageant axialement sur au moins une des tiges 11 (le terme « axialement » étant considéré en référence à l'axe d'extension de ladite tige) de manière à définir une tige crantée,
- au moins une saillie de verrouillage montée mobile par rapport audit corps principal entre une position de verrouillage, où ladite saillie s'insère dans un desdits crans, et une position de déverrouillage, où ladite saillie se retire dudit cran afin de libérer le coulissement dudit corps.

De façon non représentée, les dispositifs de verrouillage des corps principal 3 et secondaire 4 peuvent être actionnés en déverrouillage par un moyen d'actionnement commun, ledit moyen comprenant par exemple un bouton d'actionnement - par exemple sous forme de bouton poussoir - d'une traverse montée sur ledit corps principal en coulissement transversal et coopérant avec lesdits dispositifs.

## Revendications

1. Appui-tête (1) de siège de véhicule automobile, ledit appui-tête comprenant :
• une armature (2) de montage sur un dossier dudit siège,
• un corps principal (3) monté sur ladite armature,
• un corps secondaire (4) monté en coulissement longitudinal sur ledit corps principal, de sorte que ledit corps secondaire puisse adopter une pluralité de positions de réglage longitudinal, ledit corps secondaire étant pourvu d'une paroi (21) de réception de la tête d'un occupant dudit siège,
• un dispositif de verrouillage dudit corps secondaire dans la position de réglage choisie, ledit dispositif comprenant un loquet (5) monté en coulissement vertical sur ledit corps principal entre une position de verrouillage, où il coopère avec une crémaillère (6) de verrouillage s'étendant longitudinalement sur ledit corps secondaire, et une position de déverrouillage, où il s'écarte de ladite crémaillère pour libérer le coulissement dudit corps secondaire, ledit dispositif comprenant en outre un moyen ressort (7) d'actionnement dudit loquet en verrouillage et un moyen d'actionnement dudit loquet en déverrouillage à l'encontre dudit moyen ressort, ladite crémaillère présentant une pluralité de rainures (22) analogues se succédant longitudinalement, lesdites rainures présentant une face arrière (23) inclinée par rapport à la verticale, de manière à être en dépouille, et une face avant (24) sensiblement verticale, de sorte que le coulissement dudit corps secondaire vers l'avant soit possible sans avoir à déverrouiller ledit dispositif et que ledit coulissement soit bloqué vers l'arrière, ledit loquet présentant une partie de verrouillage (19a) de forme complémentaire de celle desdites rainures, de sorte que ledit loquet mis en position de verrouillage s'emboite de façon ajustée dans la rainure (22) dans laquelle il est engagé,
ledit appui-tête étant **caractérisé en ce que** :
• ledit loquet présente une autre partie de verrouillage (19b), lesdites parties de verrouillage étant disposées latéralement de part et d'autre en vue selon une direction longitudinale,
• ladite crémaillère comprend une rainure d'extrémité arrière (30) de verrouillage dudit corps secondaire en fin de course vers l'avant, ladite rainure étant disposée en partie médiane de ladite crémaillère observée en vue selon une direction longitudinale,
• ledit loquet est pourvu d'une partie de verrouillage additionnelle (25) disposée entre lesdites parties de verrouillage (19a,19b) de manière à s'insérer dans ladite rainure d'extrémité (30) quand ledit corps secondaire est disposé en fin de course vers l'avant,
• ladite rainure d'extrémité (30) présente une face avant (26) et une face arrière (27) sensiblement verticales, ladite rainure d'extrémité présentant une forme complémentaire de celle de ladite partie additionnelle (25) de sorte que ladite partie additionnelle s'insère dans ladite rainure d'extrémité de façon ajustée, ladite face arrière bloquant tout déplacement vers l'avant dudit corps secondaire en fin de course.

2. Appui-tête selon la revendication 1, **caractérisé en ce qu'**il comprend deux loquets (5) coopérant chacun avec une crémaillère (6) respective.

3. Appui-tête selon l'une quelconque des revendications précédentes, **caractérisé en ce qu'**une crémaillère (6) est disposée sur un organe de guidage (17a, 17b) en coulissement du corps secondaire (4) sur le corps principal (3).

4. Appui-tête selon la revendication précédente, **caractérisé en ce que** l'organe de guidage (17a, 17b) est sous forme d'un tenon solidaire du corps secondaire (4), ledit tenon coulissant dans une mortaise (18a, 18b) prévue dans le corps principal (3).

5. Appui-tête selon la revendication précédente, **caractérisé en ce qu'**il comprend un tenon supérieur (17a) et un tenon inférieur (17b) coulissant chacun dans une mortaise supérieure (18a) et inférieure (18b) respective.

6. Appui-tête selon l'une quelconque des revendications précédentes, **caractérisé en ce que** :
• le loquet (5) est pourvu de deux rails (9) disposés latéralement de part et d'autre, lesdits rails s'étendant longitudinalement,
• lesdits rails coopèrent en coulissement avec deux rails réciproques (10) respectifs prévus sur le corps secondaire (4),
de manière à bloquer ledit loquet en rotation selon un axe vertical lors de l'actionnement en réglage dudit corps secondaire.

7. Appui-tête selon l'une quelconque des revendications précédentes, **caractérisé en ce que** le loquet (5) est pourvu d'une encoche (28) disposée en zone médiane dudit loquet observé en vue selon une direction longitudinale, ladite encoche coopérant en coulissement avec un rail réciproque (29) prévu sur le corps secondaire (4), de manière à bloquer ledit loquet en rotation selon un axe vertical lors de l'actionnement en réglage dudit corps secondaire.

## Patentansprüche

1. Kopfstütze (1) für Kraftfahrzeugsitz, die Kopfstütze umfassend
• einen Rahmen (2) zur Montage an einer Rückenlehne des Sitzes,
• einen Hauptkörper (3), der an dem Rahmen montiert ist,
• einen sekundären Körper (4), der in Längsrichtung gleitend auf dem Hauptkörper montiert ist, sodass der sekundäre Körper eine Vielzahl von Längseinstellpositionen einnehmen kann, wobei der sekundäre Körper mit einer Wand (21) zum Aufnehmen des Kopfs eines Insassen des Sitzes versehen ist,
• eine Verriegelungsvorrichtung des sekundären Körpers in der gewählten Einstellposition, die Vorrichtung umfassend eine Sperrklinke (5), die vertikal gleitend auf dem Hauptkörper zwischen einer Verriegelungsposition, in der sie mit einer Verriegelungszahnstange (6) zusammenwirkt, die sich in Längsrichtung auf dem sekundären Körper erstreckt, und einer Entriegelungsposition, in der sie sich von der Zahnstange entfernt, um das Gleiten des sekundären Körpers freizugeben, montiert ist, die Vorrichtung ferner umfassend eine Federeinrichtung (7) zum Betätigen der Sperrklinke beim Verriegeln und eine Betätigungseinrichtung der Sperrklinke beim Entriegeln gegen die Federeinrichtung, wobei die Zahnstange eine Vielzahl von analogen Rillen (22) aufweist, die in Längsrichtung aufeinander folgen, wobei die Rillen eine Hinterseite (23) aufweisen, die in Bezug auf die Vertikale geneigt ist, um hinterschnitten zu sein, und eine Vorderseite (24), die im Wesentlichen vertikal ist, sodass das Verschieben des sekundären Körpers nach vorne möglich ist, ohne dass die Vorrichtung entriegelt werden muss, und dass das Verschieben nach hinten gesperrt ist, wobei die Sperrklinke einen Verriegelungsabschnitt (19a) aufweist, dessen Form komplementär zu der der Rillen ist, sodass der in die Verriegelungsposition gebrachte Sperrklinke passgenau in die Rille (22) einrastet, in die sie eingreift,
wobei die Kopfstütze **dadurch gekennzeichnet ist, dass**:
• die Sperrklinke einen weiteren Verriegelungsabschnitt (19b) aufweist, wobei die Verriegelungsabschnitte in Längsrichtung gesehen seitlich auf beiden Seiten in Sicht angeordnet sind,
• die Zahnstange eine hintere Endnut (30) zum Verriegeln des sekundären Körpers am Ende des Vorwärtswegs umfasst, wobei die Nut in Längsrichtung gesehen in einem mittleren Abschnitt der Zahnstange angeordnet ist,
• die Sperrklinke mit einem zusätzlichen Verriegelungsabschnitt (25) versehen ist, der zwischen den Verriegelungsabschnitten (19a, 19b) angeordnet ist, um in die Endnut (30) eingefügt zu werden, wenn der sekundäre Körper in Endlage nach vorne angeordnet ist,
• die Endnut (30) eine im Wesentlichen vertikale Vorderseite (26) und Rückseite (27) aufweist, wobei die Endnut eine zu der des zusätzlichen Abschnitts (25) komplementäre Form aufweist, sodass der zusätzliche Abschnitt passgenau in die Endnut eingefügt wird, wobei die hintere Seite in Endlage jegliche Vorwärtsbewegung des sekundären Körpers sperrt.

2. Kopfstütze nach Anspruch 1, **dadurch gekennzeichnet, dass** sie zwei Sperrklinken (5) umfasst, die jeweils mit einer jeweiligen Zahnstange (6) zusammenwirken.

3. Kopfstütze nach einem der vorhergehenden Ansprüche, **dadurch gekennzeichnet, dass** eine Zahnstange (6) an einem Führungselement (17a, 17b) zum Verschieben des sekundären Körpers (4) auf dem Hauptkörper (3) angeordnet ist.

4. Kopfstütze nach dem vorherigen Anspruch, **dadurch gekennzeichnet, dass** das Führungselement (17a, 17b) in Form eines Zapfens ist, der fest mit dem sekundären Körper (4) verbunden ist, wobei der Zapfen in einem Schlitz (18a, 18b) gleitet, der in dem Hauptkörper (3) bereitgestellt ist.

5. Kopfstütze nach dem vorherigen Anspruch, **dadurch gekennzeichnet, dass** sie einen oberen Zapfen (17a) und einen unteren Zapfen (17b) umfasst, die jeweils in einem jeweiligen oberen (18a) und unteren (18b) Zapfenloch gleiten.

6. Kopfstütze nach einem der vorhergehenden Ansprüche, **dadurch gekennzeichnet, dass**
• die Sperrklinke (5) mit zwei Schienen (9) versehen ist, die seitlich auf beiden Seiten angeordnet sind, wobei sich die Schienen in Längsrichtung erstrecken,
• die Schienen gleitend mit zwei jeweiligen kopplungssymmetrischen Schienen (10) zusammenwirken, die auf dem sekundären Körper (4) bereitgestellt sind,
sodass eine Drehung der Sperrklinke um eine vertikale Achse bei der Verstellbetätigung des sekundären Körpers gesperrt wird.

7. Kopfstütze nach einem der vorhergehenden Ansprüche, **dadurch gekennzeichnet, dass** die Sperrklinke (5) mit einer Kerbe (28) versehen ist, die in Längsrichtung gesehen in einem mittleren Bereich der Sperrklinke angeordnet ist, wobei die Kerbe gleitend mit einer kopplungssymmetrischen Schiene (29) zusammenwirkt, die an dem sekundären Körper (4) bereitgestellt ist, sodass die Sperrklinke bei der Verstellbetätigung des sekundären Körpers gegen eine Drehung um eine vertikale Achse gesperrt wird.

## Claims

1. Headrest (1) for a motor vehicle seat, said headrest comprising:
• a frame (2) for mounting on a backrest of said seat,
• a main body (3) mounted on said frame,
• a secondary body (4) mounted so as to slide longitudinally on said main body, such that said secondary body can adopt a plurality of longitudinal adjustment positions, said secondary body being provided with a wall (21) for receiving the head of an occupant of said seat,
• a device for locking said secondary body in the selected adjustment position, said device comprising a latch (5) mounted to slide vertically on said main body between a locking position, where it cooperates with a locking rack (6) extending longitudinally on said secondary body, and an unlocking position, where it moves away from said rack to release the sliding of said secondary body, said device further comprising spring means (7) for actuating said latch in the locking position and means for actuating said latch in the unlocking position against said spring means, said rack having a plurality of similar grooves (22) extending longitudinally, said grooves having a rear face (23) inclined relative to the vertical, so as to be undercut, and a substantially vertical front face (24), so that said secondary body can slide forwards without having to unlock said device and so that said sliding is blocked backwards, said latch having a locking part (19a) of a shape complementary to that of said grooves, so that said latch, when placed in the locking position, fits snugly into the groove (22) in which it is engaged,
said headrest being **characterised in that**:
• said latch has another locking part (19b), said locking parts being arranged laterally on either side in view in a longitudinal direction,
• said rack comprises a rear end groove (30) for locking said secondary body at the forward end of its travel, said groove being disposed in the middle portion of said rack as viewed in a longitudinal direction,
• said latch is provided with an additional locking part (25) disposed between said locking parts (19a, 19b) so as to insert into said end groove (30) when said secondary body is disposed at the forward end of its travel,
• said end groove (30) has a substantially vertical front face (26) and rear face (27), said end groove having a shape complementary to that of said additional part (25) so that said additional part fits snugly into said end groove, said rear face blocking any forward movement of said secondary body at the end of its travel.

2. Headrest according to claim 1, **characterised in that** it comprises two latches (5), each cooperating with a respective rack (6).

3. Headrest according to any of the preceding claims, **characterised in that** a rack (6) is disposed on a member (17a, 17b) for guiding the sliding of the secondary body (4) on the main body (3).

4. Headrest according to the preceding claim, **characterised in that** the guiding member (17a, 17b) is in the form of a tenon connected with the secondary body (4), said tenon sliding in a mortise (18a, 18b) provided in the main body (3).

5. Headrest according to the previous claim, **characterised in that** it comprises an upper tenon (17a) and a lower tenon (17b), each sliding in a respective upper mortise (18a) and lower mortise (18b).

6. Headrest according to any of the preceding claims, **characterised in that**:
• the latch (5) is provided with two rails (9) disposed laterally on either side, said rails extending longitudinally,
• said rails cooperate in sliding with two respective reciprocal rails (10) provided on the secondary body (4),
so as to lock said latch in rotation about a vertical axis when said secondary body is actuated for adjustment.

7. Headrest according to any of the preceding claims, **characterised in that** the latch (5) is provided with a notch (28) disposed in the middle area of said latch when viewed in a longitudinal direction, said notch cooperating in sliding manner with a reciprocal rail (29) provided on the secondary body (4), so as to lock said latch in rotation about a vertical axis when said secondary body is actuated for adjustment.
